# EUROPEAN PATENT APPLICATION

(11) **EP 4 132 100 A1**
(43) Date of publication of application: **08.02.2023**
(21) Application number: 21808950.6
(22) Date of filing: 21.05.2021
(51) Int. Cl.: H04W 36/00, H04W 36/38, H04W 36/32, H04W 80/10

(54) **METHOD AND DEVICE FOR PROVIDING LOCAL DATA NETWORK INFORMATION TO TERMINAL IN WIRELESS COMMUNICATION SYSTEM**

(30) Priority: 22.05.2020 KR 20200061943
(71) Applicant: Samsung Electronics Co., Ltd., Gyeonggi-do 16677 (KR)
(72) Inventor: LEE, Jicheol, Suwon-si, Gyeonggi-do 16677 (KR); JEONG, Sangsoo, Suwon-si, Gyeonggi-do 16677 (KR)
(74) Representative: HGF
(86) International application number: PCT/KR2021/006318
(87) International publication number: WO 2021/235880

(57) **Abstract**

The present disclosure relates to a 5G or pre-5G communication system to be provided for supporting a higher data transmission rate beyond a 4G communication system such as LTE. A method, according to one embodiment of the present disclosure, is a method for providing local data network information to a terminal from a session management function (SMF) entity in a wireless communication system, the method comprising the steps of: according to the mobility of a terminal, deciding, on the basis of first information, to add a protocol data unit (PDU) session anchor-user plane function (PSA-UPF) for a PDU session; establishing the PDU session with the PSA-UPF which has been decided to be added; configuring a PDU path for a downlink and an uplink between the PSA-UPF and the terminal; and transmitting, to the terminal, a PDU session modification command for instructing the addition of a new PSA-UPF, wherein the first information may include at least one among policy and charging control (PCC) information, and local data network (DN) configuration information which is received from a policy control function (PCF) entity.

## Description

### [Technical Field]

The disclosure relates to a wireless communication system and, more particularly, to a method and apparatus for providing local data network information according to movement of a terminal in a cellular wireless communication system, for example, a 5G system.

### [Background Art]

Since the commercialization of 4G communication systems, efforts have been made to develop improved 5G or pre-5G communication systems to meet the ever increasing demand for wireless data traffic. As such, 5G or pre-5G communication systems are also called "beyond 4G network" or "post LTE system".

To achieve higher data rates, 5G communication systems are being considered for implementation in the extremely high frequency (mmWave) band (e.g., 60 GHz band). To decrease path loss and increase the transmission distance in the mmWave band, various technologies including beamforming, massive multiple-input multiple-output (massive MIMO), full dimensional MIMO (FD-MIMO), array antennas, analog beamforming, and large scale antennas are considered for 5G communication systems.

Additionally, to improve system networks in 5G communication systems, technology development is under way regarding evolved small cells, advanced small cells, cloud radio access networks (cloud RANs), ultra-dense networks, device-to-device (D2D) communication, wireless backhaul, moving networks, cooperative communication, coordinated multi-points (CoMP), interference cancellation, and the like.

In addition, advanced coding and modulation (ACM) schemes such as hybrid FSK and QAM modulation (FQAM) and sliding window superposition coding (SWSC), and advanced access technologies such as filter bank multi carrier (FBMC), non-orthogonal multiple access (NOMA), and sparse code multiple access (SCMA) are also under development for 5G communication systems.

Meanwhile, to evolve from the existing 4G LTE system to the 5G system, 3GPP in charge of cellular mobile communication standards has named a new core network architecture as 5G core (5GC) and is in the process of standardization.

Compared to the evolved packet core (EPC) being the core for the existing 4G network, the 5GC supports the following differentiated functions.

First, a network slice functionality is introduced in the 5GC. As 5G requirements, the 5GC should support various types of terminals and services such as enhanced mobile broadband (eMBB), ultra-reliable low-latency communications (URLLC), and massive machine type communications (mMTC). These terminals/services have different requirements for the core network. For example, an eMBB service requires a high data rate, and a URLLC service requires high stability and low latency. A technique proposed to meet such various service requirements is a network slice scheme.

The network slice is a way to create multiple logical networks through virtualization of a single physical network, and individual network slice instances (NSIs) may have different characteristics. Hence, various service requirements can be satisfied by having a network function (NF) suitable for the characteristic of each NSI. Various 5G services can be efficiently supported by allocating an NSI suitable for the characteristic of a service requested by each terminal.

Second, the 5GC can facilitate the support of the network virtualization paradigm by separating the mobility management function and the session management function. In existing 4G LTE, all terminals are able to be provided with services from the network through signaling exchange with a single core equipment called mobility management entity (MME) that takes charge of registration, authentication, mobility management, and session management functions. However, in 5G, as the number of terminals increases explosively and the mobility and traffic/session characteristics to be supported are subdivided according to the types of terminals, if all functions are supported by a single equipment such as the MME, the scalability of adding an entity for each required function is inevitably reduced. Hence, to improve scalability in terms of function/implementation complexity and signaling load of the core equipment in charge of the control plane, various functions are being developed based on the structure separating the mobility management function and the session management function.

Meanwhile, techniques for applying edge computing technology that transmits data using an edge server to a wireless communication system are being discussed in recent years. Edge computing technology may include, for example, multi-access edge computing (MEC) or fog computing. Edge computing technology may refer to a technique for providing data to an electronic device (terminal or user equipment) through a separate server (edge server or MEC server) installed at a location geographically close to the electronic device, for example, inside or near a base station. For example, an application that requires low latency among at least one application installed in the electronic device may transmit or receive data via an edge server installed at a geographically close location, without using a server located on an external data network (DN) (e.g., Internet).

### [Disclosure of Invention]

### [Technical Problem]

In the 5G core network supporting edge computing, when a local PDU session anchor user plane function (local PSA-UPF) entity for a local data network (local DN) is added/changed/deleted, relocation of the application server may occur. As such, when a local PSA-UPF is added/changed/deleted, the session management function (SMF) entity of the 5G core network should notify the terminal of control information about the upper network layer. Then, when the terminal receives the control information for the upper network layer from the SMF entity, it performs an appropriate operation correspondingly.

However, the 5G core network does not provide an operation in which this procedure is performed. Also, the terminal cannot perform an operation for the case of receiving control information about the upper network layer from the SMF entity.

Accordingly, the disclosure provides a procedure that notifies control information about the upper network layer to the terminal from the 5G core network when a local PSA-UPF is added/changed/deleted.

In addition, the disclosure provides an apparatus and method that handle control information about the upper network layer received by the terminal from the 5G core network in response to addition/change/deletion of a local PSA-UPF.

### [Solution to Problem]

A method according to an embodiment of the disclosure, as a method for a session management function (SMF) entity to provide local data network information to a terminal in a wireless communication system, may include: determining to add a protocol data unit (PDU) session anchor-user plane function (PSA-UPF) for a PDU session based on first information according to mobility of the terminal; establishing a PDU session with the PSA-UPF having been determined to be added; configuring PDU paths for downlink and uplink between the PSA-UPF and the terminal; and transmitting a PDU session modification command indicating new PSA-UPF addition to the terminal.

The first information may include at least one of policy and charging control (PCC) information or local data network (DN) configuration information received from a policy control function (PCF) entity.

A method according to another embodiment of the disclosure, as a method for a terminal to receive local data network information from a session management function (SMF) entity in a wireless communication system, may include: transmitting and receiving a protocol data unit (PDU) by using a PDU session configured with the terminal; receiving a PDU session modification command indicating addition of a new PDU session anchor-user plane function (PSA-UPF) from the SMF entity; receiving, through the new PSA-UPF, a router advertisement (RA) message transmitted by the SMF; reconfiguring the new PSA-UPF; and performing upper layer control based on reconfiguration of the new PSA-UPF.

### [Advantageous Effects of Invention]

According to the disclosure, when a local PSA-UPF is added (or changed/deleted), the upper layer network context of the terminal needs to be released. In this case, the SMF provides information on the local DN to the terminal, so that the terminal can control the upper layer context. Further, by defining this procedure, the wireless communication network can provide control information about the upper network layer to the terminal in response to addition/change/deletion of a local PDU session anchor user plane function (local PSA-UPF) entity. Also, the terminal may receive the control information about the upper network layer due to addition/change/deletion of the local PSA-UPF from the wireless communication network and may take an appropriate operation.

### [Brief Description of Drawings]

FIG. 1 is a diagram illustrating the 5G system architecture using a reference point representation in a wireless communication system.
FIG. 2 is a diagram illustrating the architecture of network entities in a wireless communication system according to various embodiments of the disclosure.
FIG. 3 is a diagram illustrating another architecture of the 5G core network supporting edge computing according to an embodiment of the disclosure.
FIG. 4 is an illustrative diagram for explaining a case in which the UE moves by using a network topology according to the disclosure.
FIGS. 5A and 5B are illustrative diagrams for explaining the internal configuration of a UE and a case of establishing a PDU session with a wireless communication network and a data network according to an embodiment of the disclosure.
FIG. 5C is an illustrative diagram for describing a local DN binding context according to an embodiment of the disclosure.
FIG. 6 is a signal flow diagram for a case where the SMF provides control information on the upper layer network context together with information on the PDU session and local DN to the UE according to an embodiment of the disclosure.
FIGS. 7A and 7B are signal flow diagrams for a case where the SMF provides local DN notification and upper layer network context control information to the UE according to an embodiment of the disclosure.
FIGS. 8A and 8B are signal flow diagrams depicting operations of individual nodes to provide corresponding information to the UE when a local PSA is changed in response to an AF request in the network according to an embodiment of the disclosure.
FIGS. 9A and 9B are illustrative diagrams for explaining a procedure for providing local DN information and upper layer network context control information to the UE, and operations in the UE according to an embodiment of the disclosure.
FIG. 10 is a block diagram of an NF according to the disclosure.

### [Mode for the Invention]

Hereinafter, embodiments of the disclosure will be described in detail with reference to the accompanying drawings. In the description of the disclosure, descriptions of well-known functions and structures incorporated herein may be omitted to avoid obscuring the subject matter of the disclosure. Also, the terms described below are defined in consideration of their functions in the disclosure, and these may vary depending on the intention of the user, the operator, or the custom. Hence, their meanings should be determined based on the overall contents of this specification. In the following description, the term "base station" refers to a main agent allocating resources to terminals and may be at least one of eNode B, Node B, BS, radio access network (RAN), access network (AN), RAN node, radio access unit, base station controller, or network node. The term "terminal" may refer to at least one of user equipment (UE), mobile station (MS), cellular phone, smartphone, computer, or multimedia system with a communication function. In the disclosure, the term "downlink (DL)" refers to a wireless transmission path through which the base station sends a signal to the terminal, and the term "uplink (UL)" refers to a wireless transmission path through which the terminal sends a signal to the base station. Additionally, embodiments of the disclosure are described using LTE or LTE-A systems as illustration, but the embodiments of the disclosure may be applied to other communication systems having similar technical backgrounds or channel configurations. Further, it should be understood by those skilled in the art that the embodiments of the disclosure are applicable to other communication systems without significant modifications departing from the scope of the disclosure.

In the following description of the disclosure, a description will be given of the session management according to the movement of the UE in the wireless communication system. Further, in the disclosure, according to the movement of the UE, a procedure related to relocation of an application server accessed by the UE in the edge computing system may also be applied.

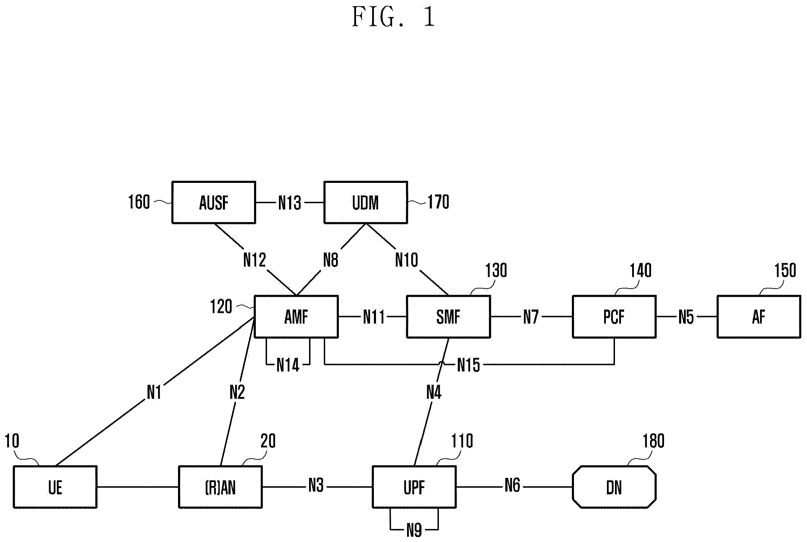

FIG. 1 is a diagram illustrating the 5G system architecture using a reference point representation in a wireless communication system.

With reference to FIG. 1, the 5G system architecture may include various components (i.e., network functions (NFs)). Among them, authentication server function (AUSF) entity 160, (core) access and mobility management function (AMF) entity 120, session management function (SMF) entity 130, policy control function (PCF) entity 140, application function (AF) entity 150, unified data management (UDM) entity 170, data network (DN) 180, user plane function (UPF) entity 110, (radio) access network ((R) AN) 20, and terminal (i.e., user equipment (UE)) 10 are illustrated in FIG. 1.

Each of the devicies illustrated in FIG. 1 may be implemented as a server or equipment, or may be implemented as a network slice instance as described above. When implemented as a network slice instance, two or more identical or different network slice instances may be implemented on one server or equipment, and one network slice instance may be implemented on two or more servers or equipments.

The above NFs may support the following functions.

The AUSF 160 may process and store data for authentication of the UE.

The AMF 120 may provide a function for the connection and mobility management for each UE, and one UE may be basically connected to one AMF. Specifically, the AMF may support functions, such as signaling between CN nodes for mobility between 3GPP access networks, termination of the radio access network (RAN) CP interface (i.e., N2 interface), termination N1 of NAS signaling, NAS signaling security (NAS ciphering and integrity protection), AS security control, registration management (registration area management), connection management, idle mode UE reachability (including control and execution of paging retransmission), mobility management control (subscription and policy), support of intra-system mobility and inter-system mobility, support of network slicing, SMF selection, lawful intercept (for AMF event and L1 system interface), session management (SM) message delivery between the UE and the SMF, transparent proxy for routing SM messages, access authentication, access authorization including roaming authority check, delivery of SMS messages between the UE and the short message service function (SMSF), security anchor function (SAF), and/or security context management (SCM). Some or all of these functions of the AMF 120 can be supported in a single AMF instance operating as one AMF.

The DN 180 may mean, for example, an operator service, Internet access, or a 3rd party service. The DN 180 may transmit a downlink protocol data unit (PDU) to the UPF 110 or may receive a PDU transmitted from the UE 10 through the UPF 110.

The PCF 140 may provide a function of receiving information on the packet flow from the application server and determining policies for mobility management, session management, and the other. Specifically, the PCF 140 may support functions, such as supporting a unified policy framework for controlling the network behavior, providing policy rules so that the control plane function(s) (e.g., AMF, SMF) can enforce the policy rules, and implementing a front end to access relevant subscription information for policy making in a user data repository (UDR).

The SMF 130 provides a session management function, and when the UE has a plurality of sessions, the individual sessions may be managed by different SMFs. specifically, the SMF 130 may support functions, such as session management (e.g., session establishment, modification, and release, including tunnel maintenance between the UPF and the AN node), UE IP address allocation and management (including selective authentication), setting up traffic steering to route traffic to the appropriate destination in the UPF, termination of interfaces toward policy control functions, enforcing the control part of the policy and quality of service (QoS), lawful intercept (for SM event and L1 system interface), termination of the SM part of NAS messages, downlink data notification, initiation of AN specific SM information (transmitted to AN via the AMF over N2), determining SSC mode of the session, and roaming functionality. As described above, some or all functions of the SMF 130 may be supported in a single SMF instance operating as one SMF.

The UDM 170 may store user's subscription data, policy data, and the like. The UDM 170 may include two parts, that is, an application front end (FE) (not shown) and a user data repository (UDR) (not shown).

The FE may include a UDM-FE taking charge of location management, subscription management, and processing of credentials, and a PCF-FE taking charge of policy control. The UDR may store data required for functions provided by the UDM-FE and a policy profile required by the PCF. Data stored in the UDR may include user subscription data including subscription identifier, security credential, access and mobility related subscription data, and session related subscription data, and policy data. The UDM-FE may access subscription information stored in the UDR and may support functions such as authentication credential processing, user identification handling, access authentication, registration/mobility management, subscription management, and SMS management.

The UPF 110 may transmit a downlink PDU received from the DN 180 to the UE 10 via the (R)AN 20 and transmits an uplink PDU received via the (R)AN 20 from the UE 10 to the DN 180. Specifically, the UPF 110 may support functions, such as anchor point for intra/inter radio access technology (RAT) mobility, external PDU session point of interconnect to data network, packet routing and forwarding, packet inspection and user plane part of policy rule enforcement, lawful intercept, traffic usage reporting, uplink classifier to support traffic flow routing toward data network, branching point to support multi-homed PDU session, QoS handling for user plane (e.g., packet filtering, gating, uplink/downlink rate enforcement), uplink traffic verification (service data flow (SDF) to QoS flow mapping), transport level packet marking in uplink and downlink, and downlink packet buffering and downlink data notification triggering. Some or all functions of the UPF 110 may be supported in a single UFP instance operating as one UPF.

The AF 150 may interact with the 3GPP core network to provide services (e.g., support functions including access to application influence on traffic routing and network capability exposure, and interaction with a policy framework for policy control).

The (R)AN 20 may collectively refer to new radio access networks supporting both evolved E-UTRA (e-UTRA) being an evolved version of 4G radio access technology and New Radio (NR) access technology (e.g., gNB).

The gNB may support functions, such as radio resource management function (i.e., radio bearer control, radio admission control, connection mobility control, dynamic allocation of resources to the UE in uplink/downlink (scheduling)), Internet Protocol (IP) header compression, encryption and integrity protection of user data streams, selection of AMF 120 upon attachment of the UE 10 if routing toward the AMF 120 is not determined based on information provided to the UE 10, routing of user plane data toward UPF(s) 110, routing of control plane information toward the AMF 120, connection setup and release, scheduling and transmission of paging messages (generated from AMF), scheduling and transmission of system broadcast information (generated from AMF or operation and maintenance (O&M)), configuration of measurement and measurement reporting for mobility and scheduling, transport level packet marking in uplink, session management, support of network slicing, QoS flow management and mapping to data radio bearer, support of UE in inactive mode, NAS message distribution function, NAS node selection function, radio access network sharing, dual connectivity, and tight interworking between NR and E-UTRA.

The UE 10 may mean a user equipment. The user equipment may be referred to as a term such as a terminal, a mobile equipment (ME), and a mobile station (MS). Also, the user equipment may be a portable device such as a notebook computer, a cellular phone, a personal digital assistant (PDA), a smartphone, and a multimedia device, or a non-portable device such as a personal computer (PC) and a vehicle-mounted device. Hereinafter, it will be referred to as a user equipment (UE) or a terminal.

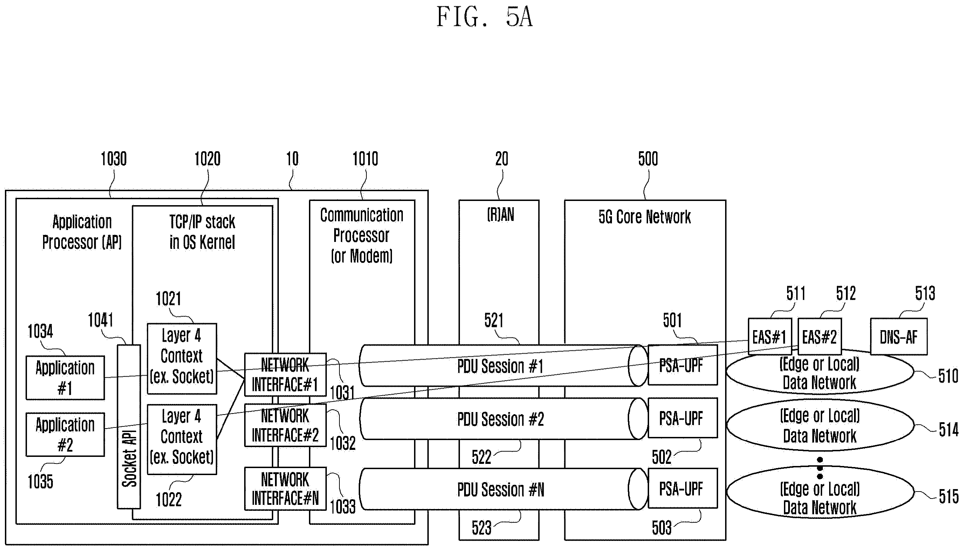

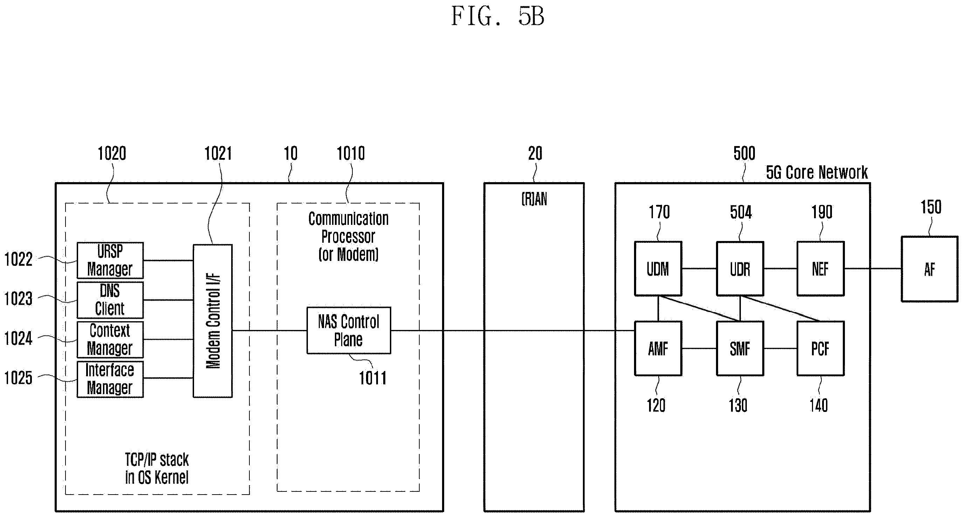

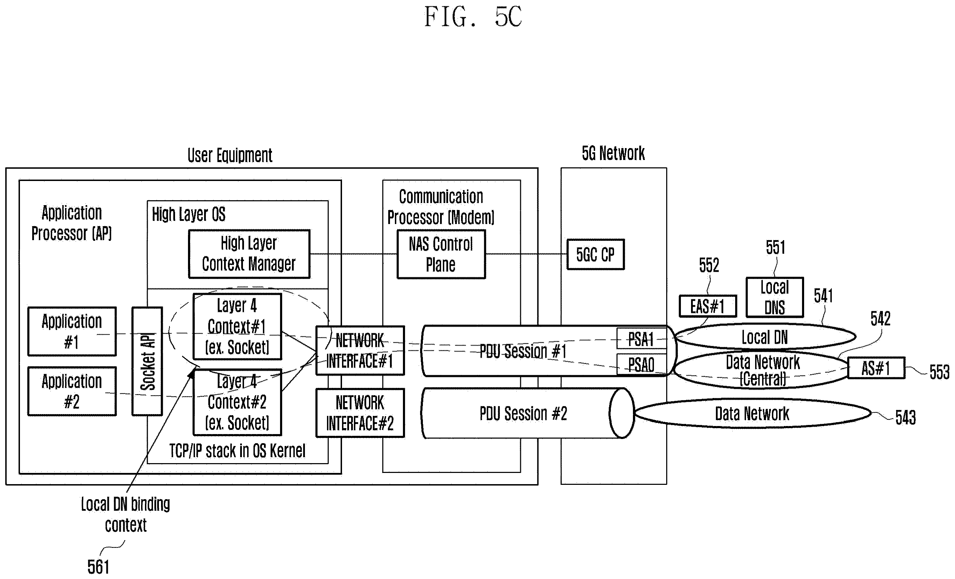

A network exposure function (NEF) entity and an NF repository function (NRF) entity are not shown in FIG. 1 for clarity of description, but all NFs shown in FIG. 5 to be described later may perform mutual operations with the NEF and the NRF as necessary.

A description is given of the NRF. The NRF (not shown in FIG. 1) may support a service discovery function. When receiving a second NF discovery request from a first NF instance, the NRF may perform a discovery operation for the second NF and provide information on the discovered second NF instance to the first NF instance. It can also maintain available NF instances and the services they support.

Meanwhile, FIG. 1 illustrates a reference model for a case in which the UE accesses one DN by using one PDU session for convenience of description, but the disclosure is not limited thereto.

The UE 10 may simultaneously access two (i.e., local and central) data networks by using multiple PDU sessions. Here, two SMFs may be selected for different PDU sessions. However, each SMF may have a capability of controlling both a local UPF and a central UPF within a PDU session.

Further, the UE 10 may simultaneously access two (i.e., local and central) data networks provided within a single PDU session.

In the 3GPP system, a conceptual link between the NFs in the 5G system is defined as a reference point. The following illustrates reference points included in the 5G system architecture represented in FIG. 1.
- N1: reference point between UE and AMF
- N2: reference point between (R)AN and AMF
- N3: reference point between (R)AN and UPF
- N4: reference point between SMF and UPF
- N5: reference point between PCF and AF
- N6: reference point between UPF and data network
- N7: reference point between SMF and PCF
- N8: reference point between UDM and AMF
- N9: reference point between two core UPFs
- N10: reference point between UDM and SMF
- N11: reference point between AMF and SMF
- N12: reference point between AMF and AUSF
- N13: reference point between UDM and authentication server function (AUSF)
- N14: reference point between two AMFs
- N15: reference point between PCF and AMF in case of a non-roaming scenario, reference point between PCF in visited network and AMF in case of a roaming scenario

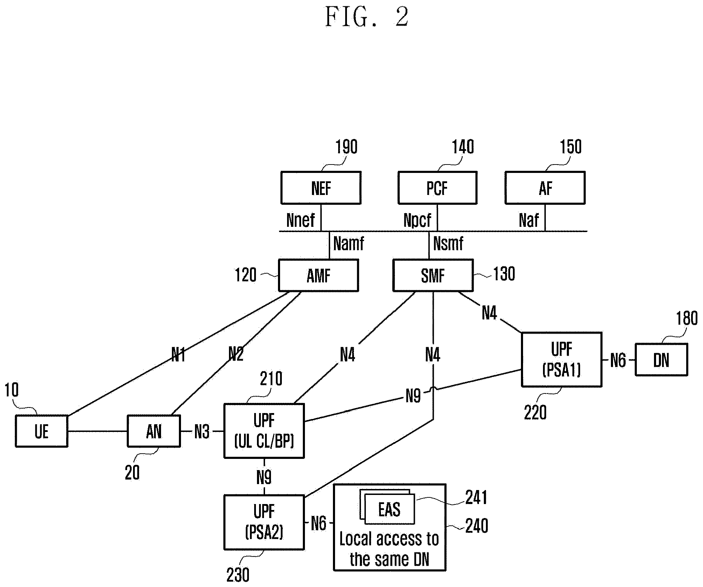

FIG. 2 is a diagram illustrating the architecture of network entities in a wireless communication system according to various embodiments of the disclosure.

The network entity of the disclosure is a concept including a network function according to system implementation. A term such as 'part' or 'device' used hereafter indicates a unit for processing at least one function or operation, which may be implemented using hardware, software, or a combination thereof. In addition, as described above, each function may be implemented in one device or server, or may be implemented by using two or more servers or devices.

In FIG. 2, the components are substantially the same as those of FIG. 1, but with the following differences.

Compared with FIG. 1, the NEF 190 added in FIG. 2 provides a means to securely expose services and capabilities provided by 3GPP network functions for, e.g., 3rd party, internal exposure/re-exposure, application function, and edge computing. The NEF 190 may receive information from other network function(s) (based on exposed capabilities of other network function(s)). The NEF 190 may store the received information as structured data by using a standardized interface to a data storage network function. The stored information can be re-exposed by the NEF 190 to other network functions and other application functions, and can be used for other purposes such as analytics.

Also, 3 different UPFs 210, 220 and 230 and a new DN 240 are illustrated in FIG. 2. The first UPF 210 connected to the AN 20 as in FIG. 1 may be connected over N9 to the third UPF 230 for connecting to the new DN 240. Further, the first UPF 210 may be connected to the existing DN 180 through the second UPF 220.

The configuration illustrated in FIG. 2 exemplifies one of the structures of the 5G core network supporting edge computing. The control plane functional entities of the 5G core network shown in FIG. 2 are the same as those of FIG. 1 described above, and the same reference symbols are given to the same parts. A 5G core network architecture in which the UE 10 communicates with an edge application server (EAS) via the first UPF 210 acting as an uplink classifier (ULCL)/branching point (BP) is shown. The UE 10 may be connected to the second UPF 220 through the first UPF 210 serving as ULCL/BP UPF for user's protocol data units (PDUs), and may then be connected to the data network (DN) 180. Here, the second UPF 220 may be the first PDU session anchor user plane function (PSA-UPF) in FIG. 2.

Further, the first UPF 210 may be connected to the third UPF 230 while being connected to the second UPF 220. Here, the third UPF 230 as the second PSA-UPF may connect to the DN 240 at a location geographically close to the UE. An edge application server (EAS) 241 providing edge computing services is located on the regionally close data network 240, and the UE 10 may communicate with the EAS 241 to provide an edge computing service. The SMF 130 may establish N4 sessions with the first UPF 210, the second UPF 220, and the third UPF 230, and transmit a rule for forwarding traffic for each of the UPFs 210, 220 and 230 to control the individual UPFs 210, 220 and 230. In addition, the SMF 130 may transmit 3-tuple information including destination IP address, destination port number, and protocol number to the ULCL/BP UPF 210, the first UPF 210 operating as a ULCP so that the UE 10 connects to the third UPF 230 being locally close second PSA-UPF, and may determine whether to route the traffic of the UE 10 to the local data network or the first PSA-UPF 220. In this structure, to enable the UE 10 to communicate with the EAS 241 through the nearby local PSA-UPF 230, the 5G core network may perform a procedure for adding/changing/removing the ULCL/BP 210 and the local PSA-UPF 230.

Meanwhile, in the legacy 3GPP 5G core network, relocation of a PDU session anchor-user plane function (PSA-UPF) does not take into account data path delay. That is, in the legacy 3GPP 5G core network, the session management function (SMF) internally determines the relocation of a PSA-UPF by using topology information. Various embodiments of the disclosure may provide a method for the 5G core network and an application program to determine whether to relocate a PSA-UPF in consideration of the delay time of the data path in response to a request from an application function requiring a low-latency service.

According to various embodiments of the disclosure, the 5G core network and the application program determine the relocation of a PSA-UPF in consideration of the delay of the data path. When a handover occurs due to a case where the UE receiving services from one or more application programs exits the service area in which the currently connected application program is deployed, if PSA-UPF relocation is performed, the IP address of the UE may be changed and service interruption may occur.

According to various embodiments of the disclosure, considering the delay requested by the application, if the delay requested by the application is satisfied by the existing data path in the area to which the UE has moved, service interruption may be minimized by not performing PSA-UPF relocation.

According to various embodiments of the disclosure, when the UE moves and provides a service through a newly changed path, or when the delay requested by the application program is not satisfied, it is possible to provide a service that satisfies the delay time requested by the application program by reconfiguring the path with a new PSA-UPF.

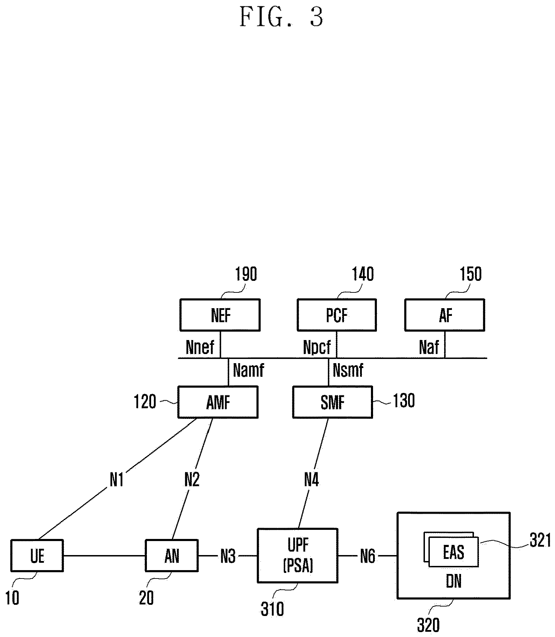

FIG. 3 is a diagram illustrating another architecture of the 5G core network supporting edge computing according to an embodiment of the disclosure.

As described above, for the control plane functions of the 5G core network shown in FIG. 3, the same reference symbols are given to the same components as described in FIGS. 1 and 2. Hence, additional descriptions of the same components will be omitted.

FIG. 3 according to the disclosure illustrates a 5G core network architecture in which the UE 10 communicates with an EAS 321 included in the DN 320 without using ULCL/BP. In this network architecture, in order for the UE 10 to access the EAS 321 through the PSA-UPF 310 close to the UE 10 after UE movement, a procedure for PSA-UPF relocation may be performed using service and session continuity (SSC) mode 2 or SSC mode 3.

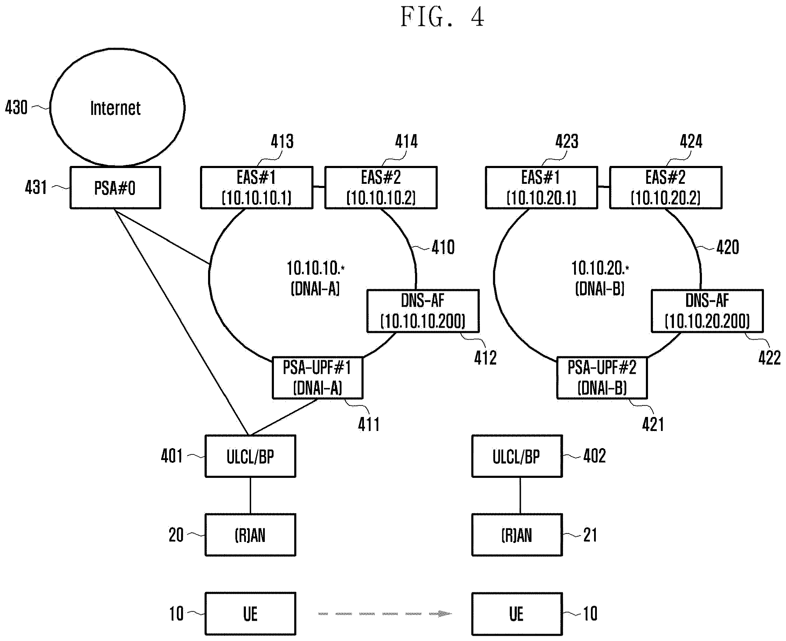

FIG. 4 is an illustrative diagram for explaining a case in which the UE moves by using a network topology according to the disclosure.

According to the diagram shown in FIG. 4, a network configuration diagram in which local data networks have separate IP ranges in an IPv4 ULCL environment is illustrated.

Referring to the configuration of FIG. 4, a specific application (app, not shown in FIG. 4) in the UE 10 may connect to a first data network 410, for example, the data network whose IP address is set to "10.10.10.*". When the UE 10 connects to the first data network 410 in this way, it can connect through PSA-UPF#1 (411) being a UPF for connecting to the first data network 410, a ULCL/BP 401, and the RAN 20 connected to the ULCL/BP 401. Further, when the UE 10 connects to the Internet, it can connect through the ULCL/BP 401 being a UPF for connecting to the Internet and the corresponding RAN 20. Here, when the UE 10 connects to the first data network 410, the UE may have "10.10.10.xx" as a data network access identifier (DNAI) as described above.

When the UE moves to a second RAN 21 as illustrated in FIG. 4, it can connect to a data network whose IP address is set to "10.10.20.*" through a ULCL/BP 402 being a new UPF and new PSA-UPF#2 (421). As another example, although the UE 10 moves to the second RAN 21, it may be connected to previous PSA-UPF#1 (411) through the ULCL/BP 402 being a new UPF.

A case may occur in which the UE 10 connects through the ULCL/BP 402 being a new UPF and new PSA-UPF#2 (421). In this case, before the DNAI change, the UE 10 is connected to the first local data network 410, and the app of the UE 10 is connected to EAS#1 (413), so that the UE 10 can create a TCP context. Further, when the DNAI is changed due to the movement of the UE 10 as described above, the SMF (not shown in FIG. 4) may perform a procedure for adding an additional PSA. After the DNAI change, the app of the UE 10 should be connected to the IP address (e.g., "10.10.20.1") of EAS#1 (423) of the second local data network 420. However, the TCP context of the UE 10 is maintained, and the app of the UE 10 cannot connect to EAS#1 (420) of the second local data network 420 because the app is not aware of the local network change and the existing TCP context is still maintained.

A more detailed explanation of this is as follows.

In the network configuration diagram of FIG. 4, the UE 10 may be moved from a place where the first local DN 410 is located to a place where it accesses the second local DN 420. In such a case, as illustrated in FIG. 4, the first PSA-UPF 411 of the UE 10 may be not changed. That is, the UE 10 may maintain PSA-UPF#1 (411). In this case, the IP address of the UE 10 is maintained, but in the application layer session to which the UE 10 is to be connected through first local PSA-UPF#1 (411), the context of the UE 10 should be removed when the PSA-UPF 411 for the first local DN 410 is released. However, in the current ULCL or local PDU-UPF deletion operation, there is no information notifying this to the UE 10. In this case, when the UE 10 connects to the second local DN 420 and attempts to access the same EAS, the upper layer context for the first local DN 410 remains in the UE 10. As a result, the UE 10 cannot access the EAS of the second local DN 420. More specifically, this upper layer context may be DNS (domain name system or domain name server) information for a fully qualified domain name (FQDN) of the EAS. The DNS address of the EAS received from the first local DN may be, for example, "10.10.10.1". This DNS procedure may be cached in the DNS client of the UE 10 by the lifetime of the DNS record. Even when the UE 10 connects to the second local DN due to movement or SMF (not shown in FIG. 4) determination, when a DNS query for the same EAS#1 is issued, the connection is made to the address of "10.10.10.1" due to the information cached in the DNS client of the UE 10. In such a case, it is not possible to transmit or receive data traffic to or from EAS#1 (423) in the second local DN.

As another example, this is a case in which a connection-oriented upper layer session is established between the first local DN 410 and EAS#1 (413). For example, a TCP connection of the UE 10 may be established between the first local DN 410 and EAS#1 (413). In this situation, due to movement of the UE 10 or local determination of the SMF, when the SMF removes the PSA-UPF 411 connected to the first local DN 410 and connects the session with PSA-UPF#2 (421) toward the second local DN 420, the TCP connection, which is one of the upper layer network contexts of the UE 10, is maintained without being disconnected from the previous session. Hence, the UE 10 cannot connect to the IP address (e.g., "10.10.20.1") of EAS#1@LDN2 (423) located in the second local DN 420.

To solve this problem, the disclosure assumes a structure inside the UE as shown in FIGS. 5A and 5B.

FIGS. 5A and 5B are illustrative diagrams for explaining the internal configuration of a UE and a case of establishing a PDU session with a wireless communication network and a data network according to an embodiment of the disclosure.

FIGS. 5A and 5B are shown separately because it is difficult to represent both the configuration of the UE and the configuration of the network in one drawing. In addition, it can be seen from FIGS. 5A and 5B that components included in one specific component, for example, the communication processor or modem 1010 of the UE may include the NAS control plane 1011.

First, with reference to FIG. 5A, the UE 10 may include a communication processor or modem 1010 and an application processor (AP) 1030. Hereinafter, the communication processor or modem 1010 may be referred to as "communication processor" or "modem" and all of them may correspond to reference numeral 1010 in FIGS. 5A and 5B. In addition, it should be noted that all elements unnecessary in describing the disclosure have been omitted in FIGS. 5A and 5B. For example, elements essential for wireless communication such as memory, power, and antenna may be further included. In addition, the UE 10 may include various circuits or logics for user convenience. For example, various circuits, logics and/or modules such as RF transceiver circuit, display module, touch screen, speaker, and microphone may be further included.

The application processor 1030 may basically run at least one application. FIG. 5A illustrates a case in which two different applications 1031 and 1032 are running. In the application processor 1030, a TCP/IP stack 1020 may be included in the operating system (OS) kernel. For convenience of description, it will be referred to as "TCP/IP stack". Layer 4 contexts 1021 and 1022 may be included in the TCP/IP stack 1020. The layer 4 contexts 1021 and 1022 may be, for example, a socket. The sockets 1021 and 1022 may be connected to the corresponding applications 1031 and 1032 through a socket application interface (API).

Also, the communication processor 1010 and the application processor 1030 may be connected through network interfaces 1031, 1032 and 1033. In FIG. 5A, three different network interfaces 1031, 1032 and 1033 are illustrated, and among them, the first network interface 1031 is illustrated as being connected to the sockets 1021 and 1022.

The UE 10 may connect to the 5G core network 500 through an access network 20 such as a base station. As such, when the UE 10 is connected to the 5G core network 500, a PDU session may be established between the UE 10 and the PSA-UPF of the 5G core network 500. FIG. 5A illustrates a case in which N PDU sessions 521, 522 and 523 can be configured in one UE.

In addition, the UE 10 may ultimately receive a service from the 5G core network 500, or may receive a data service from at least one data network 510 among the data networks 510, 514 and 515 through the 5G core network 500. FIG. 5A illustrates a case in which the first data network 510 is an edge computing data network. However, the data network 510 may be a local data network (local DN).

Next, with reference to FIG. 5B, in the TCP/IP stack 1020 of the UE 10, a modem control interface 1021 for connecting to the modem, a URSP manager 1022, a DNS client 1023, a context manager 1024, and an interface manager 1025 may be included. Also, in the TCP/IP stack 1020 of the UE 10, additional components may be further included as necessary in addition to the components described in FIG. 5B.

The communication processor 1010 may include a NAS control plane 1011.

In addition, as described above, the 5G core network 500 may include the AMF 120, the SMF 130, the PCF 140, the UDM 170, and the NEF 190. Additionally, the UDR 504 that has been described above in FIG. 1 is further illustrated. The 5G core network 500 may be connected to an AF 150 located outside through the NEF 190.

Although the configuration of the UE 10 has been separately illustrated in FIG. 5A and FIG. 5B, those skilled in the art can identify the overall configuration of the UE from the drawings of FIGS. 5A and 5B, and it should be noted that the diagrams of FIGS. 5A and 5B are configurations for the network interface and the upper layer context. Also, in the following description, FIG. 5A and FIG. 5B will be collectively referred to as FIG. 5.

In FIG. 5, the user equipment (UE) 10 is depicted as being composed of an application processor (AP) and a communication processor (CP) as described above. However, in the UE 10, the application processor and the communication processor may be implemented as a single chip. In this case, both the application processor and the communication processor may be included in one processor. For example, even when one process physically exists, the logical function performed by the AP and the logical function performed by the CP may be the same. Applications of the UE 10 may reside in the AP, and such an application may send/receive a request/response to/from the mobile operating system (e.g., Android, Linux, Tizen, BSD Unix, iOS) by invoking a network-related system call and a system library call through the socket interface 1041.

In addition, as described above, the TCP/IP stack 1020 resides in the mobile operating system running on the AP, and the TCP context may be managed by a kernel socket for TCP context management. Also, the mobile operating system may communicate with the CP 1010 through at least one of the network interfaces 1031, 1032 and 1033. Further, in the AP 1030, a URSP manager 1022 for URSP processing, a DNS client 1023, a context manager 1024 for upper network layer context management, and an interface manager 1025 for network interface management may be included. In addition, these managers 1022, 1023, 1024 and 1025 may be connected to the CP 1010 through the modem control interface (modem control I/F) 1021 and used for control purposes. The CP 1010 may interwork with a base station by implementing functions provided by the 3GPP air interface. Further, a module for controlling the NAS control plane 1011 may exist in the CP 1010, and the NAS control plane 1011 may interwork with the AMF 120 of the 5G core network 500. A session-related NAS control message may be delivered through the AMF 120 to the SMF 130.

The protocol data unit (PDU) transmitted through the network interface of the UE 10 is an IP datagram when the PDU session type is IP. This IP datagram may reach the PSA-UPF 501 of the 5G core network 500 through the PDU session (521 in FIG. 5). The PSA-UPF 501 may transmit the received IP datagram to the data network 510 being an IP network.

In the disclosure, it is assumed that the data network is an edge computing data network. Edge application servers (ESAs) 511 and 512 and a domain name server (DNS) 513 may reside in the data network 501. The ESAs 511 and 512 and the DNS 513 may communicate with the UE 10. The UDM, UDR, NEF, AF, AMF, SMF, and PCF residing in the 5G core network 500 perform the same function as the network functions described in FIG. 1, and thus a repeated description will be omitted herein.

In FIG. 5, the relationship between the network interface of the UE 10 and the PDU session is illustrated on the assumption of one-to-one connection. When the application program of the UE 10 requests a TCP connection, a TCP session is established. In this process, establishment of a TCP session may be requested through a method such as "connect" system call. When a TCP session is successfully established in the operating system, the TCP context can be bound to an interface having the source IP address of the UE.

If the network interface goes down, all contexts corresponding to the TCP session bound to the interface are removed. Due to this behavior, if a SSC mode 2 operation is performed, the SMF 130 may release a first PDU session and establish a second PDU session for PSA-UPF relocation. In this process, all TCP contexts bound to the first PDU session of the UE 10 are removed, so that the continuity of the session cannot be guaranteed.

In addition, for SSC mode 3 operation, the SMF 130 may instruct to establish a second session for PSA-UPF relocation, and the UE 10 may establish the second PDU session and temporarily exchange data traffic through both the first PDU session and the second PDU session. In this situation, while the first network interface corresponding to the first PDU session is maintained in the UE 10, a second network interface is generated in correspondence to establishment of the second PDU session. Later, when the first PDU session is released, the network interface for the first PDU session goes down, and all TCP contexts bound to this network interface are removed. Hence, the upper layer context of the first PDU session cannot maintain continuity.

In an operation proposed in the disclosure, when a first local DN is generated or released, the SMF 130 transmits information about the local DN to the UE 130 through NAS signaling, for example, a PDU session change message. Upon receiving this, the UE 10, according to the policy determined by the SMF 130, based on the information received from the local DN, may forward the relevant information to the upper network context manager, DNS client, URSP manager 1022 residing in the AP 1030 of the UE 10. Also, if there is a command to be performed in the upper network layer in relation to the local DN, the UE 10 may forward such information together. When the modem (CP) 1010 of the UE receives information corresponding to the upper layer, it forwards the information and instruction to the AP 1030, and the corresponding manager in the AP 1030 may carry out this. For example, when the SMF 130 generates a new local DN and sets a DNS server address for the corresponding local DN, the AP 1030 receives this information and may forward the information to the DNS client 1023. Alternatively, when the SMF 130 creates a new local DN and informs the CP 1010 of the UE 10 of the corresponding IP address range, the CP 1010 of the UE may transfer the corresponding IP address range to the AP 1030 so that the upper layer context manager 1024 may record it. Thereafter, when the local PSA-UPF for the corresponding local DN is removed, the SMF 130 may notify the CP 1010 of the UE 10 of local PSA-UPF removal information. Then, the SMF 130 may additionally transmit request information for releasing the upper layer context 1024 bound to the corresponding local DN to the CP 10 of the UE 10. Upon receiving this, the CP 1010 of the UE informs the information received from the SMF 130 to the upper layer context manager 1024 of the AP 1030, and the upper layer context manager 1024 of the AP 1030 may release the upper layer context (e.g., TCP context information) managed in the mobile operating system. This process can be expressed as "re-evaluate URSP".

FIG. 5C is an illustrative diagram for describing a local DN binding context according to an embodiment of the disclosure.

FIG. 5C is another representation of the configuration diagram of the UE 10 described in FIGS. 5A and 5B, and additionally explains the local DN binding context described in the disclosure. Descriptions of components not separately described are the same as in FIGS. 5A and 5B. Parts with different reference numerals in FIG. 5C are newly numbered ones for the description of the disclosure, and may be understood from the same viewpoint as in FIGS. 5A and 5B.

In FIG. 5C, application program 1 (1034) of the UE has a TCP connection with EAS#1 (552) of the local DN 551, and layer 4 context#1 (1021) is created in the high layer OS. Also, application program 2 (1035) of the UE has a connection with AC#1 (553) located in the central DN 542. The layer 4 context 1021 of the UE having a connection with EAS#1 (552) of the local DN 541 may be an example of the local DN binding context. In the operation described in this disclosure, upper layer network context information may be a local DN binding context. In particular, it can be said that the operation of controlling the upper layer network context due to a notification of the local DN 541 corresponds to the operation of controlling the local DN binding context, and the operation for the local DN binding context may include, for example, removing or maintaining layer 4 context #1 shown in FIG. 5C, or refreshing the DNS cache information received from the DNS server 551 configured for the local DN 541.

### <First embodiment>

The first embodiment of the disclosure proposes a scheme by which, when the SMF 130 determines to add a BP/ULCL and a local PSA-UPF, the SMF 130 informs the UE 10 of information about the local DN to be added through a PDU session change message. The SMF 130 may deliver control information for the upper layer network context together with information on the PDU session and local DN.

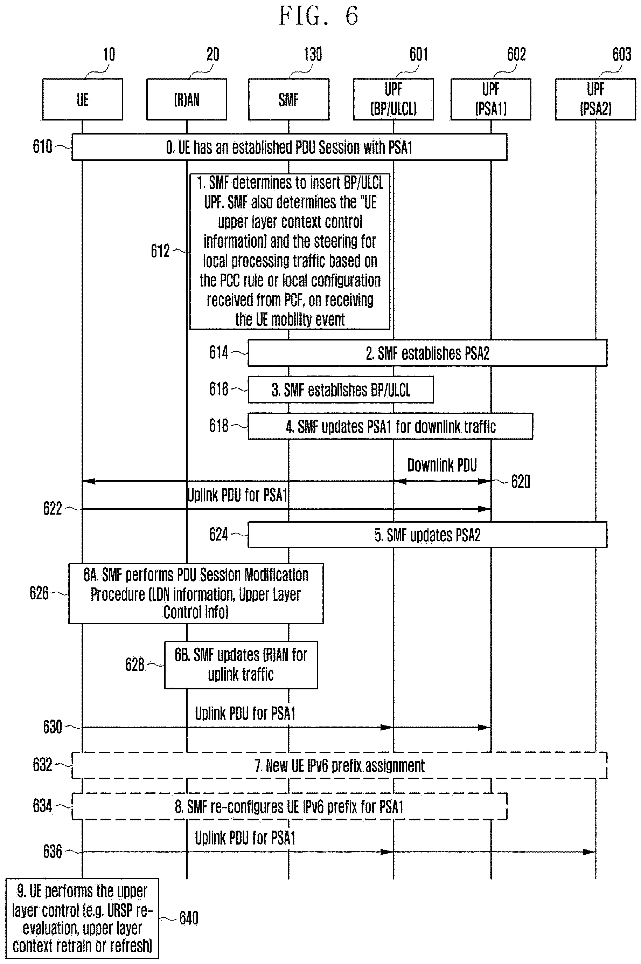

FIG. 6 is a signal flow diagram for a case where the SMF provides control information on the upper layer network context together with information on the PDU session and local DN to the UE according to an embodiment of the disclosure.

Before referring to FIG. 6, the configuration information for the local DN may include at least one of the following information.
(1) DNS server address, domain name on which DNS server operates
(2) Identifier for local DN
(3) Indication for addition/relocation/deletion of local DN: this indication indicates addition of a local DN when the SMF 130 determines to add a local PSA-UPF, and indicates deletion of a local DN when the SMF 130 deletes a local PSA-UPF.
(4) Information on IP address range of local DN to be added
(5) Server IP address for traffic to be routed to local DN, or destination IP address, destination port number, and upper layer protocol number of IP, for example, protocol number indicating TCP or UDP

Next, the upper layer network context control information related to the local DN may include at least one of the following information.
(1) Whether to delete previous DNS cache information for local DN
(2) Context control information for upper layer protocols. For example, preservation indication for upper layer protocol (e.g., TCP context, HTTP context)
(3) Re-evaluation indication for URSP: instructs to release binding of URSP to application traffic and evaluate URSP rules.
(4) Refresh indication for PDU session binding to application traffic: instructs to release binding of PDU session to specific application traffic and delete corresponding context.

In addition, the SMF 130 may receive AF traffic control information including a DNAI (AF influenced traffic steering enforcement control information) from the PCF 140. When the SMF 130 detects a change in DNAI due to the movement of the UE 10, additional PSA addition and LDN addition information may be determined.

When the SMF 130 determines to add an additional PSA, the SMF 130 may perform a procedure for ULCL and local PSA addition.

At operation 610 (procedure 0), the UE 10 may have a previously established PDU session and may be connected to the UPF 602 being PSA1 through the RAN 20 and a tunnel.

At operation 612 (procedure 1), the SMF 130 may determine the UPF 603 corresponding to PSA2 being new PSA based on a UE mobility event, and generate N4 with new PSA2. Also, upon receiving (or detecting) a UE mobility event, the SMF 130 may determine, based on the PCC rule and/or local DN configuration received from the PCF 140, "local DN notification control information", "UE upper layer context control information (i.e., local DN binding context information)", and the steering for local processing traffic. The SMF 130 may transmit an early notification requested by the AF. Then, the SMF 130 may wait for a response to the notification.

At operation 614 (procedure 2), the SMF 130 may select a new local PSA-UPF 603 and establish an N4 session with the local PSA-UPF 603.

At operation 616 (procedure 3), the SMF 130 may select the ULCL/BP UPF 601, and generate uplink forwarding rules for the ULCL/BP UPF 601, PSA1 602 and PSA2 603. The SMF 130 may forward the traffic rules directed to PSA1 602 and PSA2 603 to the ULCL UPF 601. That is, the SMF 130 may transmit an AF traffic influence late notification to the AF. Then, the SMF 130 may wait for a response.

At operation 618 (procedure 4), the SMF 130 may update the N4 session with PSA1 602. Also, for DL traffic, the SMF 130 may provide tunnel information about the ULCL-BP 601 to PSA1 602.

Thereafter, at operation 620, PSA1 602 may transmit a downlink PDU to the first UPF 601. Then, the first UPF 601 may forward the received downlink PDU to the UE 10. Also, at operation 622, the UE 10 may transmit an uplink PDU to be delivered to PSA1 602 by using a corresponding tunnel. The order of operation 620 and operation 622 may be changed when tunnel information is known in advance to the UE and PSA1 602. That is, if the tunnel information is mutually known, operation 620 may be performed after operation 622.

At operation 624 (procedure 5), the SMF 130 may update the N4 session with PSA2 603. Thereby, for DL traffic, the SMF 130 may provide tunnel information about the ULCL-BP 601 to PSA2 603.

At operation 626 (procedure 6A), when the SMF 130 needs to notify the UE 10 of L-PSA configuration information, the SMF 130 may transmit a PDU session modification command to the UE 10.

Local DN configuration information may be configured directly in the SMF 130 or configured in the PCF 140. When the SMF 130 receives policy and charging control (PCC) information for the UE 10 from the PCF 140 through the SMPolicyAssociation creation or change procedure, it may also receive the local DN configuration information, where the local DN configuration information may include 3-tuple information, DNS address, and local DN subnet address.

If the SMF 130 determines to add/change/delete a local PSA-UPF, the SMF 130 may record this as local DN event information and deliver it to the UE 10.

The SMF 130 may receive the local DN binding control information from the AF request or the PCF 140. Based on this information, the SMF 130 may deliver at least one of the following information to the UE 10.
(1) L-PSA addition,
(2) Added 3-tuple list,
(3) Added subnet address,
(4) DNS address,
(5) Existing DNS refresh indication,
(6) Upper network context preservation indication,
(7) URSP traffic re-evaluation indication information

Upon receiving this information, the UE 10 may perform an operation specified in the LDN information. That is, the upper layer context may be maintained, and URSP traffic may be re-evaluated. Thereafter, at operation 628 (procedure 6B), the SMF 130 may transmit N2 SM information to the RAN 20 through N11 and the AMF 120. That is, the SMF 130 may deliver new CN tunnel information (ULCL/BP tunnel information) to the RAN 20.

Meanwhile, at operation 630, the UE 10 may still transmit an uplink PDU to PSA1 602 through the first UPF 601 by using the previous tunnel.

At operation 632 (procedure 7), in case of IPv6 multi-homing (MH), the SMF 130 may transmit a router advertisement (RA) (new IP prefix, routing rule) message to the UE 10 through PSA2 603. The SMF 130 may also transmit a late notification to the AF.

At operation 634 (procedure 8), in case of IPv6 MH, the SMF 130 may transmit an RA (original IP prefix, routing rule) through PSA1 602 for reconfiguring the previous IP prefix.

Thereby, at operation 636, the UE 10 may transmit an uplink PDU to be delivered to PSA1 602 to the first UPF 601. Then, the first UPF 601 may forward it to PSA2 603.

Thereafter, at operation 640, the UE 10 may perform upper layer control, such as URSP re-evaluation, or upper layer context retrain or refresh.

### <Second embodiment>

The second embodiment of the disclosure defines UE and system operations when the SMF 130 performs a procedure of detecting a DNAI change due to the movement of the UE 10 and removing a local PSA. In this procedure, the SMF 130 may determine to notify the local DN configuration information and deliver upper layer network context control information to the UE 10 together with the local DN configuration change notification.

The procedure according to the second embodiment may be performed as follows. The following description will be given using the components of FIG. 6 described above.

At step 1, the UE 10 has a PDU session with an added local PSA (procedure for deleting PSA1 and maintaining PSA2).

At step 2, in case of IPv6 MH, the SMF 130 may reconfigure the UE IPv6 prefix for PSA1 602 and PSA2 603.

At step 3, the SMF 130 may determine to remove the local PSA based on various reasons. When the SMF 130 requires notification of the L-PSA configuration information to the UE 10, the SMF 130 may transmit a PDU session modification command to the UE 10. The LDN configuration information for transmission may include information regarding LDN removal, LDN identifier, removed 3-tuple list, removed subnet address, removed DNS address, existing DNS refresh indication, upper network context preservation indication, and URSP traffic re-evaluation indication.

At step 4, the SMF 130 may update PSA2 CN tunnel information to the RAN 20. If there is an additional UPF between the RAN 20 and the ULCL 601 (corresponding to a case of cascaded UPFs), CN tunnel information for this UPF may be updated.

At step 5, the SMF 130 may update AN tunnel information in the N4 session for PSA2 603. If there is an additional UPF between the RAN 20 and the ULCL 601 (corresponding to a case of cascaded UPFs), CN tunnel information for this UPF may be updated.

At step 6, the SMF 130 may release N4 of PSA1 602. In case of IPv6 MH, the SMF 130 may release the IPv6 prefix.

At step 7, if step 4/5 described above is performed, the SMF 130 may release the N4 session corresponding to the ULCP/BP 601.

### <Third embodiment>

The third embodiment of the disclosure is a procedure for the SMF 130 to deliver local DN notification and upper layer network context control information to the UE based on the operator policy for the local DN.

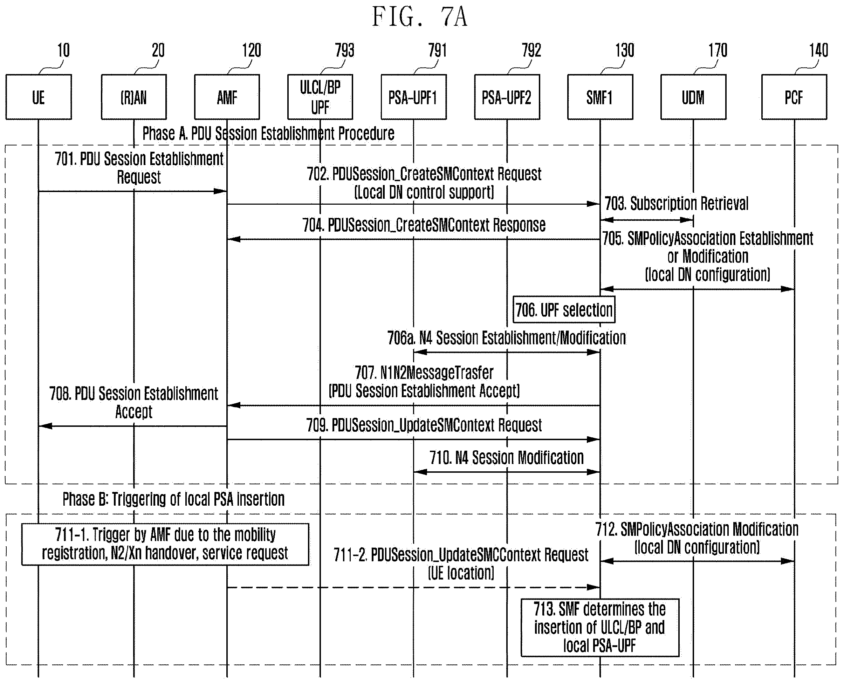

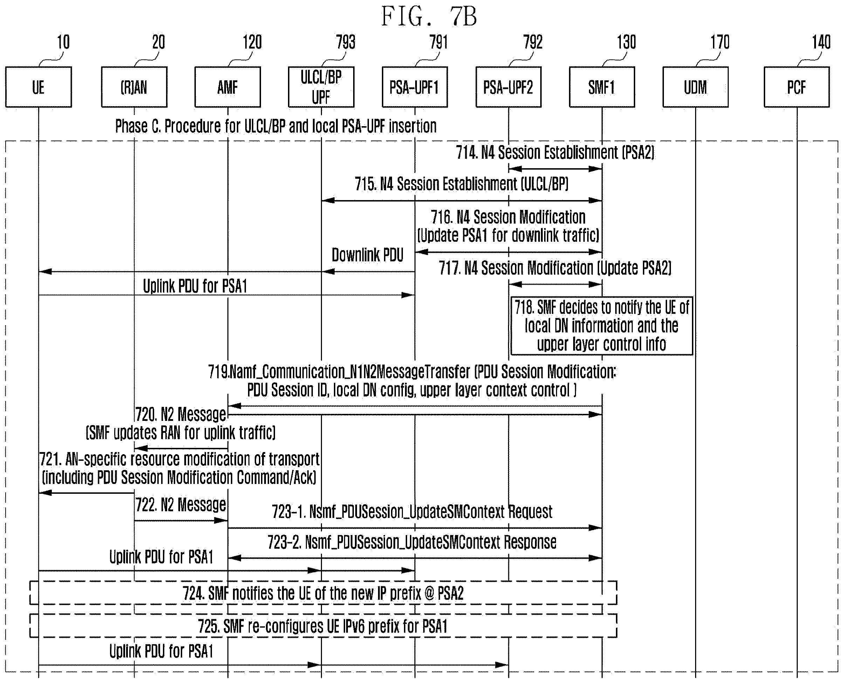

FIGS. 7A and 7B are signal flow diagrams for a case where the SMF provides local DN notification and upper layer network context control information to the UE according to an embodiment of the disclosure.

The mobile communication operator may set in advance configuration information for a local DN in operator policy information of the PCF 140. The operator policy information set in the PCF 140 may include information on the local DN for each DNAI (operator configured local DN information).

The operator policy information may include, for example, at least one of the following information.
● Local DN identifier: DNAI
● Service area for local DN: tracking area or cell list
● IP address range, e.g., 10. 10. 10.
● Whether local DNS is operated
● Local DNS address and domain name for local DNS
● Service provider identifier or sponsor identifier
● Whether to provide service continuity when moving local DN
● Whether to notify local DN information to UE

The PCF 140 may generate a PCC rule by including local DN control information in the AF traffic steering enforcement control information based on the configuration information about the local DN, and may transmit local DN notification control information to the SMF 130. The local DN notification control information may include at least one of the following information.
- Local DN identifier (e.g., data network access identifier (DNAI))
- Whether to notify local DN information to UE
- Local DN binding control information: local DN binding control information may include layer 4 (TCP) context preservation/refresh information and DNS cache refresh information.
- UE upper network context refresh indication when leaving local DN
- Local DN configuration information

The SMF 130 may receive the PCC rule, and may perform local PSA and ULCL addition operations when the UE 10 enters the DNAI area. Hence, the UE 10 may operate according to the local DN control information.

The SMF 130 may deliver a local DN addition notification to the UE 10, and may deliver upper network layer control information.

Then, signal flows and associated operations according to the disclosure will be described with reference to the accompanying FIGS. 7A and 7B. FIG. 7A and FIG. 7B may be sequentially performed. For example, after the flow of FIG. 7A is completed, the signal flow of FIG. 7B may be continued. As another example, FIG. 7B may be performed independently of FIG. 7A. The following description will be given based on a case where FIGS. 7A and 7B are sequentially performed.

In procedures 701 and 702, the UE 10 may transmit a PDU session establishment request (PDUSession CreateSMcontext request) message to the SMF 130 via the AMF 120. For establishment of the first PDU session, the UE 10 may transmit information such as whether the local DN control function is supported and whether the upper layer network context control function is supported to the SMF 130.

Upon receiving the PDU session request from the UE 10, in procedure 703, the SMF 130 may receive subscription information from the UDM 170 to identify the subscription information of the UE 10.

Upon obtaining the subscription information of the UE 10, in procedure 704, the SMF 130 may transmit a PDU session establishment context response (PDUSession CreateSMcontext response) message to the AMF 120.

In procedure 705, the SMF 130 may create a connection with the PCF 140 for receiving the SM policy and may receive a PCC rule for the PDU session of the UE 10 from the PCF 140. The PCC rule may include the AF influenced traffic steering enforcement control information. The AF influenced traffic steering enforcement control rule may include at least one of the following information.
(1) DNAI (data network access identifier)
(2) Whether local routing is supported: it may indicate more specifically whether IPv6 multihoming or ULCL is supported.
(3) IP address preservation indication (or, network interface preservation indication)
(4) Upper layer context preservation indication, or upper layer network refresh indication
(5) Whether application layer relocation is possible
(6) N6 routing information
(7) Local DN control information

When the SMF 130 adds a local PSA-UPF for connecting to the local DN, the local DN control information may include whether to notify the local DN information to the UE 10 and information to be notified to the UE 10.

In procedure 706, the SMF 130 may select a first PSA-UPF 701 capable of supporting the SSC support provided by the UE and the AF influenced traffic steering enforcement control information received from the PCF 130.

In procedures 707 and 708, the SMF 130 may determine to establish a PDU session, and transmit a PDU session establishment response message to the UE 10 through the AMF 120.

In procedures 709 and 710, the SMF 130 may receive RAN tunnel information provided by the RAN 20 from the AMF 120, and may configure tunnel information for downlink traffic of PSA-UPF 1 791.

Hereinabove, the PDU session establishment procedure has been described. Next, a case in which a local PSA is newly added (triggering of local PSA insertion) will be described.

In procedure 711, when the UE 10 detects an exit from the current registration area, it may transmit a registration request message to the AMF 120 through the RAN. Or, when the UE 10 performs handover to another base station according to a command of the base station 20, the AMF 120 may detect an occurrence of handover from the base station 20 during the handover process. Or, when the UE 10 transmits a service request in an idle state (connection management idle (CM-IDLE) state), the AMF 120 may detect that the UE 10 has been moved. To update the PDU session, the AMF 120 may transmit a PDUSesssion_Update_SMContext request including location information of the UE 10 to the SMF 120.

In procedure 712, when the PCF 140 receives a request for AF traffic steering from the AF or the AF traffic steering rule inside the operator is changed, the PCF 140 may transmit a policy and charging control (PCC) rule including the AF influenced traffic steering enforcement control information to the SMF 130. The AF influenced traffic steering enforcement control information may include the information in procedure 705 described above, such as local DN control information and upper layer network context control information.

In procedure 713, when the location movement of the UE 10 is detected due to the movement of the UE 10 (procedure 711), the SMF 130 may determine whether it has moved to a DNAI set in advance in the SMF 130 or registered through a PCC rule. Or, when AF influenced traffic control enforcement information is received from the PCC, the SMF 130 may determine whether the location of the corresponding UE is included in the location mapped to the DNAI. When the SMF 130 determines to perform ULCL/BP and local PSA-UPF addition, the SMF 130 may perform a procedure corresponding to phase C of FIG. 7.

Next, phase C will be described. Phase C may be a procedure for ULCL/BP and local PSA-UPF addition (insertion).

In procedure 714, the SMF 130 may establish an N4 session with PSA2 792.

In procedure 715, the SMF 130 may establish an N4 session with the ULCL/BP UPF 793.

In procedure 716, the SMF 130 may change the N4 session of PSA1 for downlink traffic. That is, the tunnel information directed to the RAN 20 may be updated with the tunnel information of the ULCL/BP UPF 793 generated in procedure 15. Thereafter, the downlink traffic from PSA1 791 is directed to the ULCL/BP 793.

In procedure 717, the SMF 130 may update the N4 session with PSA2 792.

In procedure 718, the SMF 130 may detect a change in the location of the UE 10 through the trigger condition in procedure 713, that is, the location information of the UE 10 from the AMF 120, and determine whether the corresponding DNAI change is made. Or, the SMF 130 may receive the PCC rule including AF influenced traffic steering enforcement control information from the PCF 140. The PCC rule may include local DN control information including local DN configuration information, and upper layer network context control information of the UE. When a new local UPF connected to the local DN is added, the local DN control information may include local DN control information instructing delivery of upper layer network context control information of the UE together with local DN configuration information to the UE. When the SMF 130 receives this local DN control information and determines to add a local PSA-UPF, it may determine to transmit a PDU session modification command message to the UE 10 through the AMF 120 for delivering local DN configuration information and upper layer network context control information to the UE 10.

In procedure 719, the SMF 130 may transmit an N1N2MessageTransfer message including the PDU session modification command message to the AMF 120. This message may include a PDU session identifier, local DN configuration information, and upper layer network context control information, which may be information for modifying the PDU session.

The local DN configuration information may be the same as the local DN information described in the first embodiment described above. Also, the upper layer network context control information may be the same as the upper layer network context control information described in the first embodiment described above.

When the SMF 130 determines to add a ULCL/BP, to transmit CN tunnel information to the RAN 20 for tunnel establishment between ULCL/BP and PSA1 and between ULCL/BP and PSA2, the CN tunnel information may be further included in the N1N2MessageTransfer message transmitted to the AMF 120.

In procedure 720, the AMF 120 may transmit, to the RAN 20, all or at least some of the information received from the SMF 130 as an N2 message, that is, the contents included in N1N2MessageTransfer.

In procedure 721, among the contents included in the RAN N2 message, tunnel information may be configured for uplink traffic received from the RAN for the local ULCL/BP. The RAN 20 may perform an AN-specific resource modification procedure on the UE 10 and transmit the PDU session modification command message included in the N2 message to the UE. Then, the RAN 20 may receive a response to this from the UE 10.

In procedure 722, the RAN 20 may transmit, to the AMF 120, tunnel information newly created for PSA2 792 and a response message received from the UE 10 in correspondence to the PDU session modification command.

In procedure 723, the AMF 120 may transfer the information received from the RAN 10 to the SMF 130 and receive a response thereto.

In procedure 724, in case of IPv6 multihoming, the SMF 130 may allocate a new IP prefix for PSA2 792 to the UE 10, and deliver it to the UE 10.

In procedure 725, in case of IPv6 multihoming, the SMF 130 may reconfigure the existing IP prefix information for PSA1 791 in the UE 10.

### <Fourth embodiment>

The fourth embodiment provides a procedure and corresponding node operations for transferring local DN information and upper layer network context information to the UE during a procedure for changing a local PSA due to an AF request.

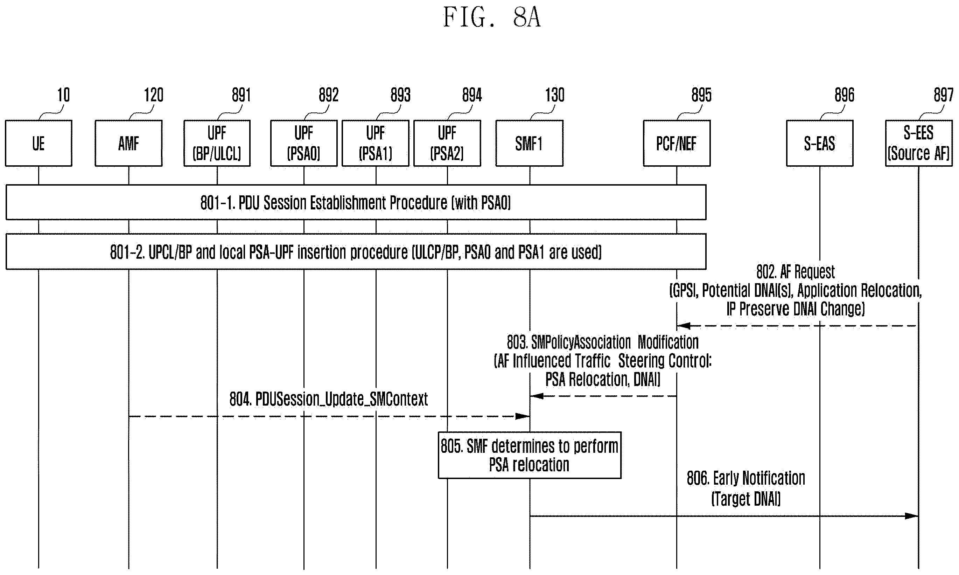

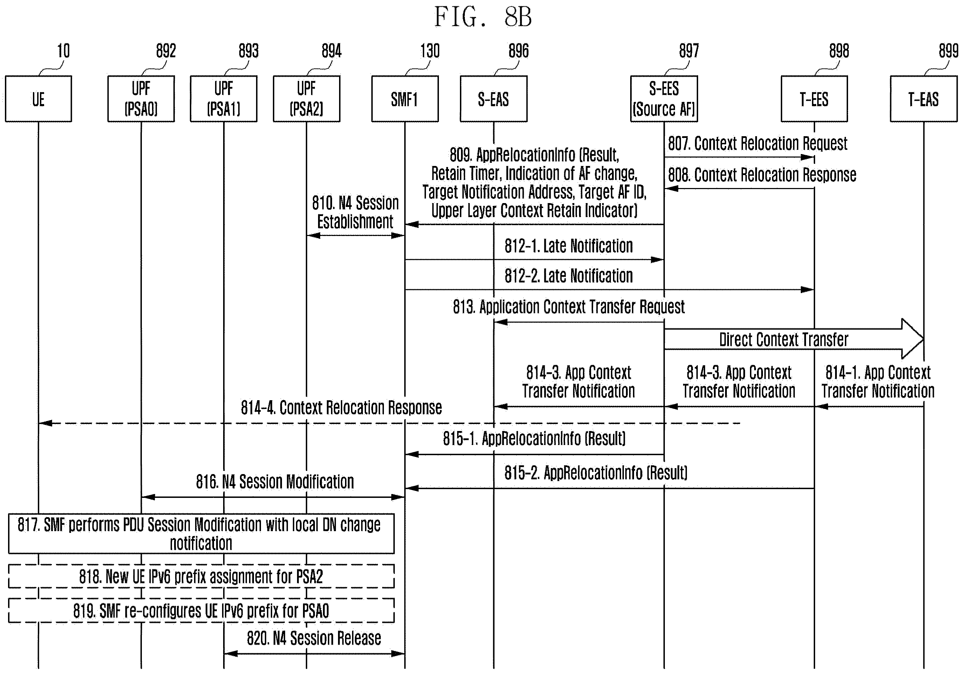

FIGS. 8A and 8B are signal flow diagrams depicting operations of individual nodes to provide corresponding information to the UE when a local PSA is changed in response to an AF request in the network according to an embodiment of the disclosure. In the following description, FIG. 8A and FIG. 8B will be collectively referred to as FIG. 8, unless it is necessary to distinguish between FIG. 8A and FIG. 8B. Also, the operation of FIG. 8B may be performed after the operation of FIG. 8A. As another example, the operation of FIG. 8B may be performed after another operation without the operation of FIG. 8A.

In procedure 801, the UE 10 may establish a PDU session with the SMF 120. The SMF 120 may select PSA-UPFO 802 in this process (procedure 801-1). A more detailed procedure for this is described in procedures 701 to 710 of the third embodiment, and thus a repeated description thereof will be omitted. In addition, the SMF 120 may determine to add a ULCP/BP and local PSA-UPF1 (procedure 801-2). This is described in procedures 711 to 725 of the third embodiment, and thus a repeated description will be omitted.

In procedure 802, the source EES 807 may act as a source AF and transmit an AF request to the PCF 805. In FIG. 8, the PCF 140 and the NEF 190 described in FIGS. 1 to 3 are shown as one node. This is for convenience of drawing configuration although they perform different operations. Hence, in the following description, the node indicated by indicia 895 will be described as PCF 895 when it operates as PCF, and will be described as NEF 895 when it operates as NEF. As a method of transferring the AF request to the PCF 895, the AF request may be stored in the UDR (not shown in FIG. 8) through the NEF 895, and the PCF 895 having received a UDR information change notification may receive it. Upon receiving the AF request, in consideration of the operator policy for the local DN described above in the third embodiment, the PCF 895 may transmit the AF influenced traffic steering enforcement control information including local DN control information and UE upper layer network context control information to the SMF 130. Both the local DN control information and UE upper layer network context control information may be delivered to the SMF 130.

In procedure 803, the SMF 130 may receive the PCC rule for the PDU session of the UE 10 from the PCF 895. The PCC rule may include AF influenced traffic steering enforcement control information. The AF influenced traffic steering enforcement control rule may include at least one of the following information.
(1) DNAI (data network access identifier)
(2) Information on service area mapped to DNAI
(3) Whether local routing is supported: it may indicate more specifically whether IPv6 multihoming or ULCL is supported.
(4) IP address preservation indication (or, network interface preservation indication)
(5) Upper layer context preservation indication, or upper layer network refresh indication
(6) Whether application layer relocation is possible, (7) N6 routing information
(8) Local DN control information

When the SMF 130 adds a local PSA-UPF for connecting to the local DN, the local DN control information may include whether to notify the local DN information to the UE 10 and information to be notified to the UE 10.

In procedure 804, when the UE 10 detects an exit from the current registration area, the UE 10 may transmit a registration request message to the AMF 120 through the RAN 20. Or, when the UE 10 performs handover to another base station according to a command of the base station, the AMF 120 may detect an occurrence of handover from the base station during the handover process. Or, when the UE 10 transmits a service request in an idle state (connection management idle (CM-IDLE) state, the AMF 120 may detect that the UE 10 has been moved. The AMF 120 may transmit a PDUSessssion_Update_SMContext request including location information of the UE 10 to the SMF 120 for updating the PDU session.

In procedure 805, the SMF 120 may determine whether to relocate the local PSA based on the PCC rule received in procedure 803 or the location information of the UE 10 received in procedure 804. For example, it is assumed that the information about local DN is set as follows.
1) Information about local DN 1
   - Local DN identifier: DNAI-A
   - Service area: TA1, TA2
   - Associated local PSA-UPF: PSA-UPF#1
   - IP subnet address: 10.10.10.*
   - Local DNS address: 10.10.10.200
   - Local DNS domain name: local1.example.com
2) Information about local DN 2
   - Local DN identifier: DNAI-B
   - Service area: TA3, TA4
   - Associated local PSA-UPF: PSA-UPF#2
   - IP subnet address: 10.10.20. *
   - Local DNS address: 10.10.20.200
   - Local DNS domain name: local2.example.com

The SMF 130 may also receive local DN control information from the PCF 895. The local DN configuration information described above may be configured directly in the SMF or may be configured in the PCF 140 and then received by the SMF 130 from the PCF 140. This information may include the following operator policy. Such operator information may be configured in advance locally in the SMF 130.
- Whether to notify UE of local DN configuration information when DNAI is generated
- Whether to notify UE of local DN change information when DNAI is changed
- Whether to notify UE of local DN removal information when DNAI is removed

The SMF 130 may identify the related DNAI based on the location information of the UE 10 received from the AMF 120, and may determine local PSA-UPF relocation to PSA-UPF#2 804 supporting the DNAI. This determination means a change of the local DN, and the SMF 130 may determine to notify the UE of local DN configuration information, local DN change information, or previous local DN control information according to the local DN control information policy received from the PCF 895. When the local DN is changed, the SMF 130 may perform a PDU session modification procedure for delivering local DN configuration information to the UE 10.

Further, along with the local DN control information, the PCF 805 may include upper layer network context information of the UE 10 in the PCC rule and deliver it to the SMF 120. The configuration information for this may include the following information.
- UE upper layer network context preservation or refresh indication when DNAI is changed
- UE upper layer network context preservation or refresh indication when DNAI is removed

For instance, if local DN1 and local DN2 are in different IP address ranges as in the example described above, the PCF 895 may transmit a policy indicating a refresh of the upper layer network context to the SMF 130 when the DNAI is changed. Upon receiving such a policy, the SMF 130 may select an indication corresponding to the policy and transmit it to the UE 10 through a PDU session modification command message. For example, the SMF 130 may deliver an upper layer network context refresh indication to the UE 10. Alternatively, when the DNAI is changed, the SMF 130 may determine to refresh the context by checking the range of the IP address in the local DN information, and transmit an upper layer context refresh indication to the UE 10.

The SMF 130 may determine to release the previously generated local PSA-UPF in response to a DNAI change. In this case, the SMF 130 may deliver an upper layer network context refresh indication together with the local DN deletion information to the UE 10. The local DN deletion information may include a local DN identifier and an indication indicating that it has been deleted.

If a condition for user event notification is satisfied, the SMF 130 may determine whether PSA-UPF relocation that can satisfy the AF request can be performed at the current location of the UE 10 and transmit a corresponding notification to the AF (source EES) 897. An early notification of the AF may include at least one of the following contents.
- Whether the IP address can be maintained
- Whether to perform PSA relocation
- Information on expected PDB when relocating PSA
- Destination DNAI information in case of DNAI change

The source EES 897 may receive an early notification for a user plane event from the SMF 130. The source EES 897 may determine whether to relocate the application context based on the received information. The source EES 897 may determine to relocate the application context when the following condition is satisfied. The source EES 897 may determine not to relocate the application context when the condition is not satisfied.

When the source EES 897 determines to relocate the application context, procedures 816 and 817 may be performed.

When the source EES 897 determines to perform PSA relocation, the source EES 897 may deliver a positive response through an AppRelocationInfo message. When the source EES 897 determines that PSA-UPF relocation is not necessary, the source EES 897 may deliver a negative response to the SMF 130.

When the source EES 897 determines to positively respond to PSA relocation, the EES 897 may make a response by including at least one of the following information in an AppRelocationInfo message.
- Positive response to PSA relocation
- Indication that the AF will be changed
- Notification address of target AF to be notified
- UE upper layer network context preservation indication

The SMF 130 may receive a response message to the early notification from the source EES (AF) 897. Upon receiving a positive result via the response message, the SMF 130 may select a new PSA-UPF1 and establish an N4 session.

The SMF 130 may deliver a late notification to the source EES (AF) 897.

The late notification message sent by the source EES 897 to the AF may include at least one of the following information.
- Target DNAI
- UE IP address
- Whether to provide upper layer context preservation information
- Whether to notify local DN information to UE
- Local DN binding information control information (e.g., whether to delete or maintain L4 context bound to local DN, or whether to delete DNS cache information)

After receiving the late notification, the source EES 897 may perform application context transfer as in procedures 823 and 824. The source EES 897 may deliver context relocation response information to the edge enabler client (EEC) of the UE 10 in procedure 814-2.

Thereafter, the source EES 897 makes a response to the SMF 130 by including at least one of the following information in AppRelocation Info in procedure 815-1.
- Whether AppRelocation is successfully performed
- Target DNAI
- Subscription information of UE (GPSI, etc.)

The SMF 130 may receive a response to the late notification.

In procedure 816, the SMF 130 performs an update procedure for the N4 session.

In procedure 817, the SMF 130 may deliver a PDU session modification message to the UE 10 through the AMF 120 as determined in procedure 805. As described in the first embodiment, the PDU session modification message may include local DN information and upper layer network context control information and may be delivered to the UE 10.

In procedure 818, for IPv6 multihoming, the SMF 130 may allocate a new IPv6 prefix to be used in PSA2 894 and transmit it to the UE 10.

In procedure 819, for IPv6 multihoming, the SMF 130 may reconfigure the settings of UE IPv6 for PSA0 892.

In procedure 820, the SMF 130 may release the N4 session for local PSA-UPF1 803 previously connected to the UE 10.

### <Fifth embodiment>

The fifth embodiment defines how the local DN information and upper layer network context control information transmitted from the SMF 130 to the UE 10 through the AMF 120 are used in the UE.

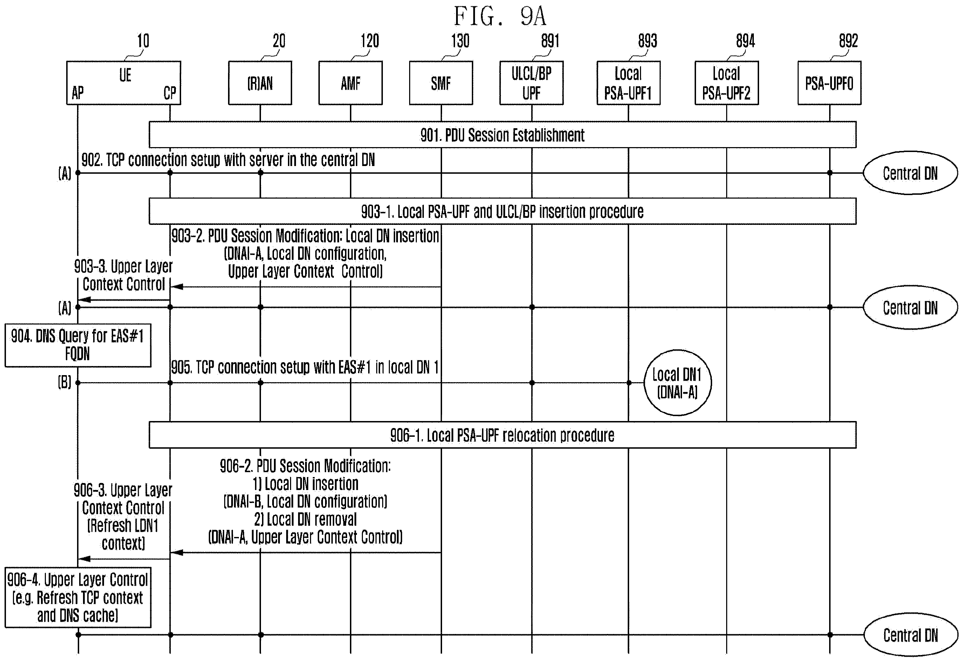

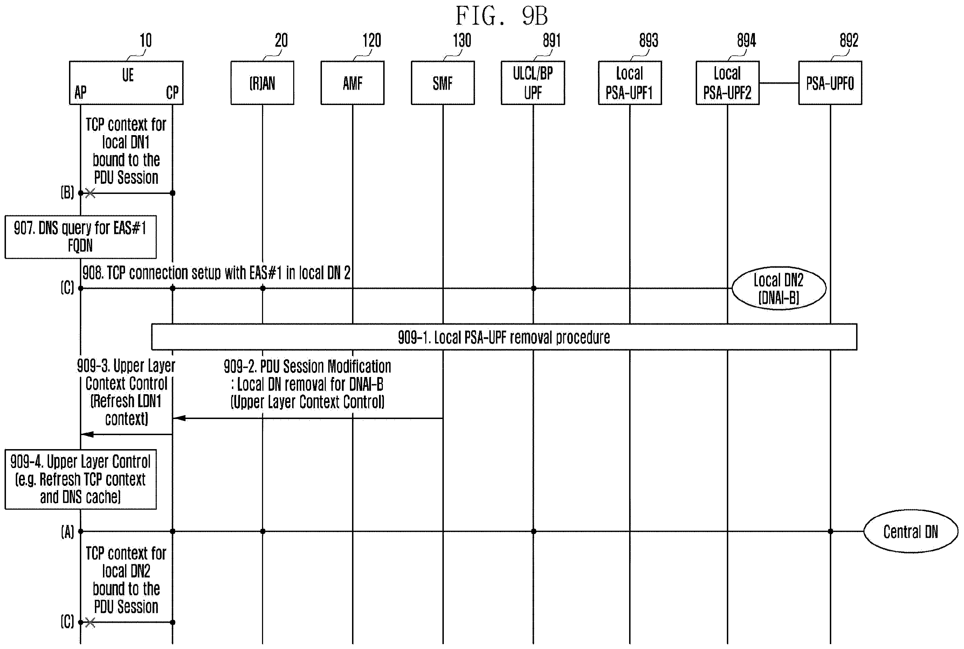

FIGS. 9A and 9B are illustrative diagrams for explaining a procedure for providing local DN information and upper layer network context control information to the UE, and operations in the UE according to an embodiment of the disclosure.

In the description of FIGS. 9A and 9B, the same reference symbols used in FIG. 8 will be used for the same elements as those of FIG. 8.

In procedure 901, the UE 10 may request the SMF 130 to establish a new PDU session. The SMF 130 may select PSA-UPFO 892, create a tunnel between PSA-UPFO 892 and the RAN 20, and transmit an acknowledgement message for the PDU session establishment request to the UE 10. As described in FIG. 5, since the UE 10 has established a new PDU session, a network interface corresponding to the new PDU session may be created, and a mapping may be made therebetween. That is, a network interface corresponding to the new PDU session may be generated between the CP 1010 and the AP 1030 in the UE 10, and a mapping may be made between the new network interface and the established PDU session. In addition, applications corresponding to the mapping therebetween may be mapped together.

In procedure 902, the UE 10 may create a TCP connection with the server residing in the central DN connected to PSA-UPFO 802. A TCP context may be created in an upper layer of the UE 10. In FIG. 9, this is denoted by indicia (A).

In procedure 903, according to various embodiments described above, the SMF 130 may determine to perform local PSA-UPF and ULCL/BP addition, select local PSA-UPF1 893, and deliver information including 3-tuple (destination IP address, destination port number, and protocol number) to the ULCL/BP 891 for the traffic toward the local PSA-UPF. The SMF 130 may transmit information on the local DN to the UE 10. Upon receiving this, the UE 10 may store the information on the local DN. Since the local DN information has been described in detail in the first embodiment, a description thereof is omitted herein. The information included in this may include local DN identifier, subnet address, local DNS address, EAS address in local DNS, 3-tuple address transmitted by the SMF to the ULCL, and the like.

In procedure 904, the UE 10 may invoke a DNS query procedure for EAS#1 FQDN at the request of the application layer. The DNS query procedure can be processed by the local DNS server located in local DN1 or by the DNS server located in the central DN. Accordingly, the UE 10 obtains the IP address for EAS#1, where local DN#1 is located.

In procedure 905, the UE 10 may establish a TCP connection by making a TCP connection request to the destination IP address for EAS#1 found through the DNS query procedure. The TCP connection thus created is denoted by indicia (B) in FIG. 9.

In procedure 906, when the SMF 130 detects a DNAI change due to movement of the UE 10 or receives a PCC rule including AF influenced traffic steering enforcement control information, the SMF 130 may determine to perform local-PSA relocation and perform a procedure of changing the local PSA-UPF. In this process, the SMF 130 may deliver a local DN addition notification to the UE 10 indicating that a second local DN has been newly added. Additionally, the SMF 130 may notify the UE 10 that previously connected local DN1 has been deleted. Here, upper layer context control information for local DN1 may be delivered together with the information that local DN1 has been removed. The upper layer context control information may include an upper layer context refresh indication for local DN2. When the upper layer network context control information includes context information refresh information corresponding to local DN2, the UE 10 may remove the upper layer context information corresponding to local DN2. For example, the TCP context associated with EAS1 of local DN1 created in procedure 904 described above may be released. Further, DNS cache refresh information is included in the upper layer control information. The DNS cache refresh indication may include a domain name FQDN provided by the local DN or the IP subnet address of local DN1. When the upper layer, that is, the AP 1030 in the UE receives the included information, the DNS cache information corresponding to the included subnet address may be deleted. Or, the DNS cache information corresponding to the target FQDN or domain name information may be deleted.

In procedure 907, the application program becomes aware that the TCP connection with EAS#1 has been lost, and may attempt to reestablish a connection with EAS#1. Here, as the corresponding DNS cache information has been deleted, it is possible to newly request and receive address information for the EAS#1 FQDN from the DNS server.

In procedure 908, at the request of the application program, if EAS#1 resides in local DN2, a TCP session may be established with local DN2 via local PSA-UPF2 894.

In procedure 909, when the UE 10 leaves the DNAI-B area or an AF request is received, the SMF 130 may remove local PSA-UPF2 894. The SMF 130 may deliver local DN information for DNAI-B to the UE 10 according to the determination of a policy that local DN information in the UE 10 should be changed from the PCC rule or self-determination of the SMF 130. The information sent to the UE 10 is information on the removal of the local DN, and upper layer network context control information may also be transmitted for a case where the local DN is to be removed. The higher layer network context control information may include a request for upper layer network context refresh and DNS cache deletion for local DN2. Upon receiving this request, the AP of the UE removes the TCP context and erases the DNS cache.

Meanwhile, each of the first to fifth embodiments described above may be independently carried out, but two or more embodiments may be operated together. For example, the first embodiment describes a procedure of adding a BP/ULCL and local PSA-UPF, the second embodiment describes a procedure of detecting a DNAI change and removing a local PSA, the third embodiment describes a method of delivering local DN notification and upper layer network context control information to the UE based on the operator policy, the fourth embodiment describes a procedure for delivering local DN information and upper layer network context information to the UE during the procedure of changing a local PSA based on an AF request, and the fifth embodiment describes a method in which the local DN information and upper layer network context control information delivered to the UE are used in the UE.

Hence, the first embodiment and the fifth embodiment may be used together, and the second embodiment and the fifth embodiment may be used together. Also, since one local PSA-UPF is added according to the first embodiment, when another local PSA is removed, the second embodiment may be used together. In addition, the first embodiment, the second embodiment, and the fifth embodiment may be used together.

Further, the first embodiment and the third embodiment may be carried out in sequence, such as when the first embodiment is applied after the third embodiment is applied, or when the third embodiment is applied after the first embodiment is applied.

As another example, when the first embodiment is carried out based on the fourth embodiment, the second embodiment may be carried out together, so that the fifth embodiment may be carried out.

In this way, when different embodiments are used together, some overlapping operations may be omitted in a specific embodiment or all may be performed.

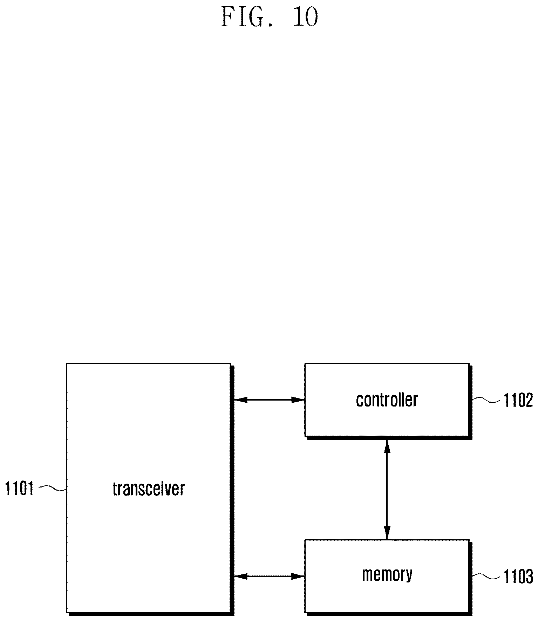

FIG. 10 is a block diagram of an NF entity according to the disclosure.

With reference to FIG. 10, the NF entity may include a transceiver 1101, a controller 1102, and a memory 1103. The NF entity may be a specific AF among the RAN, the AMF, the UPF, the SMF, the UDM, the PCF, the AUSF, the AF, and the DN described above.

The transceiver 1101 may provide an interface for communicating with other network entities. For example, when the NF is the AMF 120, the transceiver 1101 may transmit and receive signals/messages/information to and from the RAN 20, the AUSF 160, the SMF 130, the PCF 140, and another AMF. In addition, when the NF is the SMF 130, the transceiver 1101 may transmit and receive signals/messages/information to and from the AMF 120, the UDM 170, the UPF 110, and the PCF 140.

The controller 1102 may control the operation of the corresponding NF described above. For example, it is possible to control the operation of each NF described with reference to FIGS. 6 to 9. The controller 1102 may be implemented with one or more processors.

The memory 1103 may store data required by the corresponding NF, and may store information included in various messages/signals described in the disclosure.

In the disclosure described above, specific examples have been presented to help the understanding of the disclosure. However, the disclosure is not limited thereto, and may be modified in various ways based on the contents disclosed herein.

### [Industrial Applicability]

The disclosure can be applied when the UE performs addition/change/deletion of a PDU session in a wireless communication system.

## Claims

1. A method for a session management function (SMF) entity to provide local data network information to a terminal in a wireless communication system, the method comprising:
determining to add a protocol data unit (PDU) session anchor-user plane function (PSA-UPF) for a PDU session based on first information according to mobility of the terminal;
establishing a PDU session with the PSA-UPF having been determined to be added;
configuring PDU paths for downlink and uplink between the PSA-UPF and the terminal; and
transmitting a PDU session modification command indicating new PSA-UPF addition to the terminal,
wherein the first information includes at least one of policy and charging control (PCC) information or local data network (DN) configuration information received from a policy control function (PCF) entity.

2. The method of claim 1, wherein the local DN configuration information includes a domain name with which a domain name server (DNS) operates, and an Internet protocol (IP) address range of the local DN.

3. The method of claim 1, wherein the first information further includes local DN notification control information and upper layer context control information of the terminal.

4. The method of claim 1, wherein the local DN configuration information is configured directly in the SMF.

5. The method of claim 1, wherein the local DN configuration information includes 3-tuple information, a DNS address, and a subnet address of the local DN.

6. The method of claim 1, wherein second information is further transmitted together with the PDU session modification command, and wherein the second information includes at least one of an added 3-tuple list, an added subnet address, or an existing DNS refresh indication.

7. A method for a terminal to receive local data network information from a session management function (SMF) entity in a wireless communication system, the method comprising:
transmitting and receiving a protocol data unit (PDU) by using a PDU session configured with the terminal;
receiving a PDU session modification command indicating addition of a new PDU session anchor-user plane function (PSA-UPF) from the SMF entity;
receiving, through the new PSA-UPF, a router advertisement (RA) message transmitted by the SMF;
reconfiguring the new PSA-UPF; and
performing upper layer control based on reconfiguration of the new PSA-UPF.

8. The method of claim 7, wherein the upper layer control is one of upper layer context retrain and upper layer context refresh.

9. A session management function (SMF) entity capable of providing local data network information to a terminal in a wireless communication system, comprising:
a transceiver configured to communicate with other network entities;
a memory configured to store configuration information; and
at least one processor,
wherein the processor is configured to determine to add a protocol data unit (PDU) session anchor-user plane function (PSA-UPF) for a PDU session based on first information according to mobility of the terminal, control establishing a PDU session with the PSA-UPF having been determined to be added by using the transceiver, control configuring PDU paths for downlink and uplink between the PSA-UPF and the terminal by using the transceiver, and control transmitting a PDU session modification command indicating new PSA-UPF addition to the terminal through the transceiver,
wherein the first information includes at least one of policy and charging control (PCC) information or local data network (DN) configuration information received from a policy control function (PCF) entity.

10. The SMF entity of claim 9, wherein the local DN configuration information includes a domain name with which a domain name server (DNS) operates, and an Internet protocol (IP) address range of the local DN.

11. The SMF entity of claim 9, wherein the first information further includes local DN notification control information and upper layer context control information of the terminal.

12. The SMF entity of claim 9, wherein the local DN configuration information is configured directly in the SMF.

13. The SMF entity of claim 9, wherein the local DN configuration information includes 3-tuple information, a DNS address, and a subnet address of the local DN.

14. The SMF entity of claim 9, wherein second information is further transmitted together with the PDU session modification command, and wherein the second information includes at least one of an added 3-tuple list, an added subnet address, or an existing DNS refresh indication.
